# EUROPÄISCHE PATENTANMELDUNG

(11) **EP 1 902 621 A2**
(43) Veröffentlichungstag der Anmeldung: **26.03.2008**
(21) Anmeldenummer: 07017694.6
(22) Anmeldetag: 11.09.2007
(51) Int. Cl.: A21C 7/00, A21C 9/00, A21C 11/00

(54) **Teigbearbeitungsanlage**

(30) Priorität: 23.09.2006 DE 102006044990
(71) Anmelder: Werner & Pfleiderer Lebensmitteltechnik GmbH, 91550 Dinkelsbühl (DE)
(72) Erfinder: Meier, Alexander, 91602 Dürrwangen (DE); Mülders, Herbert, 52222 Stolberg (DE)
(74) Vertreter: Hofmann, Matthias

(57) **Zusammenfassung**

Eine Teigbearbeitungsanlage hat mindestens eine Wechselstation mit einem Teigling-Bearbeitungs-Wechselmodul, welches gegen mindestens ein weiteres Teigling-Bearbeitungs-Wechselmodul austauschbar ist. Die mindestens eine Wechselstation hat eine Modulaufnahmeeinrichtung (9), in die das mindestens eine Teigling-Bearbeitungs-Wechselmodul eingesetzt werden kann. Die Modulaufnahmeeinrichtung (9) hat mindestens eine stationäre Grund-Antriebsquelle (14 bis 16), die über eine Kupplung mit einer angetriebenen Komponente des Teigling-Bearbeitungs-Wechselmoduls zusammenwirkt. Die mindestens eine stationäre Grund-Antriebsquelle (14 bis 16) ist mit einer angetriebenen Komponente des weiteren Teigling-Bearbeitungs-Wechselmoduls verbindbar. Es resultiert eine Teigbearbeitungsanlage, bei der unter Beibehaltung der Flexibilität hinsichtlich der Zusammenstellung verschiedener Bearbeitungssequenzen der konstruktive Aufwand vermindert ist.

## Beschreibung

Die Erfindung betrifft eine Teigbearbeitungsanlage nach dem Oberbegriff des Anspruchs 1.

Eine derartige Teigbearbeitungsanlage ist durch offenkundige Vorbenutzung bekannt.

Derartige Teigbearbeitungsanlagen sind zwar aufgrund der durch die Austauschbarkeit der Teigling-Bearbeitungs-Wechselmodule sich eröffnenden Möglichkeit, verschiedene Bearbeitungssequenzen zusammenzustellen, sehr flexibel, konstruktiv aber aufwändig.

Es ist daher eine Aufgabe der vorliegenden Erfindung, eine Teigbearbeitungsanlage der eingangs genannten Art derart weiterzubilden, dass unter Beibehaltung der Flexibilität hinsichtlich der Zusammenstellung verschiedener Bearbeitungssequenzen der konstruktive Aufwand für die Teigbearbeitungsanlage vermindert ist.

Diese Aufgabe ist erfindungsgemäß gelöst durch eine Teigbearbeitungsanlage mit den im Kennzeichnungsteil des Anspruchs 1 angegebenen Merkmalen.

Erfindungsgemäß wurde erkannt, dass die Teigling-Bearbeitungs-Wechselmodule oftmals gleiche Antriebsanforderungen haben, die prinzipiell durch den gleichen Grundantrieb bewerkstelligt werden können. Erfindungsgemäß wird dieser Grundantrieb durch die mindestens eine Grund-Antriebsquelle bereitgestellt, der an der Modulaufnahmeeinrichtung vorgesehen ist. Auch dann, wenn in der Wechselstation eine Mehrzahl von Wechselmodulen eingesetzt werden, können diese Wechselmodule zumindest teilweise über die nicht ausgetauschte, da der Modulaufnahmeeinrichtung zugeordnete Grund-Antriebsquelle angetrieben werden. Dies spart Kosten, da die Grund-Antriebsquellen nicht bei jedem Wechselmodul erneut vorgesehen werden müssen. Verschiedene Antriebsanforderungen der über den Grundantrieb angetriebenen Wechselmodule können durch entsprechende Ansteuerung über die Teigbearbeitungsanlage erfüllt werden. So kann beispielsweise die Grund-Antriebsquelle bei Zusammenwirkung mit einem ersten Wechselmodul kontinuierlich und bei Zusammenwirkung mit einem anderen Wechselmodul intermittierend betrieben werden. Bei der Teigbearbeitungsanlage handelt es sich insbesondere um eine Brötchenanlage.

Eine Teigbearbeitungsanlage mit zwei Wechselstationen nach Anspruch 2 bringt eine besonders große Verringerung des konstruktiven Aufwand unter Beibehaltung der Wechselmöglichkeiten mit sich. Auch drei oder mehr Wechselstationen mit entsprechenden Grund-Antriebsquellen sind möglich.

Zwei stationäre Grund-Antriebsquellen pro Modulaufnahmeeinrichtung nach Anspruch 3 verringern den konstruktiven Aufwand für die Teigbearbeitungsanlage weiter, da pro Wechselmodul bis zu zwei Antriebsquellen eingespart werden können, da der entsprechende Antrieb von der Modulaufnahmeeinrichtung übernommen werden kann. Vom jeweils aufgenommenen Wechselmodul müssen nicht alle Grund-Antriebsquellen genutzt werden. Das Wechselmodul kann weiterhin eigene Antriebsquellen behalten, was je nach baulichem Aufwand für die Umrüstung auf einen Grundantrieb entschieden werden kann. Auch drei oder mehr Grund-Antriebsquellen pro Modulaufnahmeeinrichtung sind möglich.

Fest zugeordnete eigene Modul-Antriebsquellen nach Anspruch 4 erlauben einen dezentralen Wechselmodulantrieb an Stellen, wo das Grundantriebskonzept aufgrund eines zu hohen Kopplungsaufwandes nicht einsetzbar ist.

Wechselmodule nach Anspruch 5 führen zu einer besonders flexibel einsetzbaren Teigbearbeitungsanlage. Insbesondere sind folgende Modulsequenzen und damit Bearbeitungssequenzen möglich: Langrollmodul/Synchronisationsmodul/Ablagemodul, Stüpfel-/Stanzmodul/ Befeuchtungs/Streumodul/Ablagemodul, Schneidmodul/Befeuchtungs-/Streumodul/Ablagemodul, Langrollmodul/Synchronisationsmodul/-Befeuchtungs-/Streumodul/Ablagemodul.

Über die Grund-Antriebsquelle angetriebene Komponenten nach Anspruch 6 eignen sich mit besonders niedrigem Kupplungsaufwand für den Grundantrieb über die Modulaufnahmeeinrichtung.

Fest zugeordnete eigene Modul-Antriebsquellen nach Anspruch 7 verringern den Kupplungsaufwand, der an der Modulaufnahmeeinrichtung bereitgestellt werden muss.

Ein codierter Stecker nach Anspruch 8 erlaubt eine automatische Erkennung des in der Modulaufnahmeeinrichtung aufgenommenen Wechselmoduls. Eine jeweilige manuelle Programmierung einer Steuerung der Teigbearbeitungsanlage entfällt. Als codierter Stecker wird jede Einheit verstanden, mit der eine automatische Wechselmodulerkennung möglich ist.

Ausführungsbeispiele der Erfindung werden nachfolgend anhand der Zeichnung näher erläutert. In dieser zeigen:
- Fig. 1: eine Übersichtsdarstellung, die die möglichen Zusammenstellungen einer Teigbearbeitungsanlage durch Einsatz verschiedener Kombinationen von in Modulaufnahmeeinrichtungen einsetzbaren Wechselmodulen zeigt;

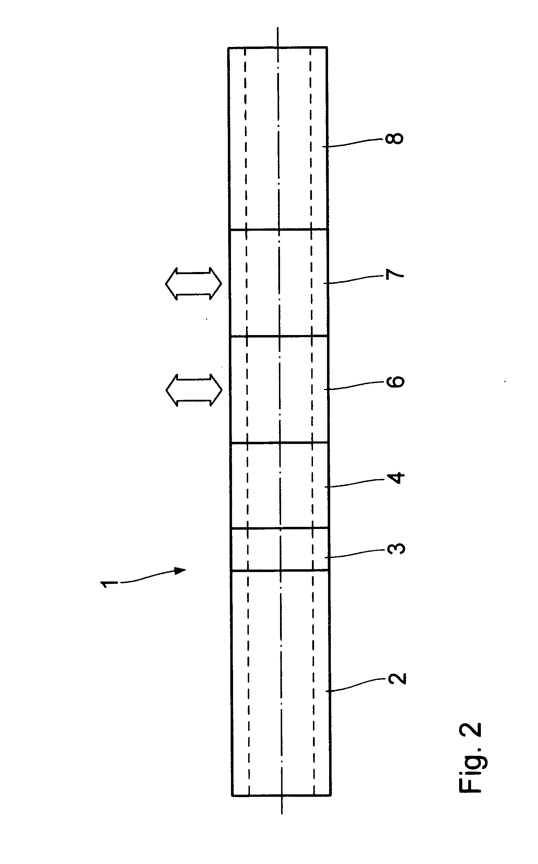

- Fig. 2: schematisch eine Aufsicht auf eine nach Fig. 1 zusammengestellte Teigbearbeitungsanlage;
- Fig. 3: vergrößert und schematisch in einer zu Fig. 1 ähnlichen Ansicht eine Modulaufnahmeeinrichtung der Teigbearbeitungsanlage nach Fig. 1;
- Fig. 4: eine Ansicht der Modulaufnahmeeinrichtung aus Blickrichtung IV in Fig. 3;
- Fig. 5: relativ zu Fig. 1 vergrößert und interne Details preisgebend ein Synchronisationsmodul als Beispiel eines in die Modulaufnahmeeinrichtung einsetzbaren Wechselmoduls, wobei auch Komponenten der Modulaufnahmeeinrichtung dargestellt sind;
- Fig. 6: eine Ansicht aus Blickrichtung VI in Fig. 5, aufgenommen in der Modulaufnahmeeinrichtung;
- Fig. 7: in einer zu Fig. 3 ähnlichen Darstellung ein Stüpfel-/Stanzmodul als weiteres Beispiel für ein in die Modulaufnahmeeinrichtung einsetzbares Wechselmodul, aufgenommen in der Modulaufnahmeeinrichtung;
- Fig. 8: eine Ansicht aus Blickrichtung VIII in Fig. 7;
- Fig. 9: in einer zu Fig. 3 ähnlichen Darstellung ein Befeuchtungs/Streumodul als weiteres Beispiel eines in die Modulaufnahmeeinrichtung aufnehmbaren Wechselmoduls, wobei auch Teile der Modulaufnahmeeinrichtung dargestellt sind; und
- Fig. 10: eine Ansicht des Befeuchtungs-/Streumoduls aus Blickrichtung X in Fig. 9, aufgenommen in der Modulaufnahmeeinrichtung.

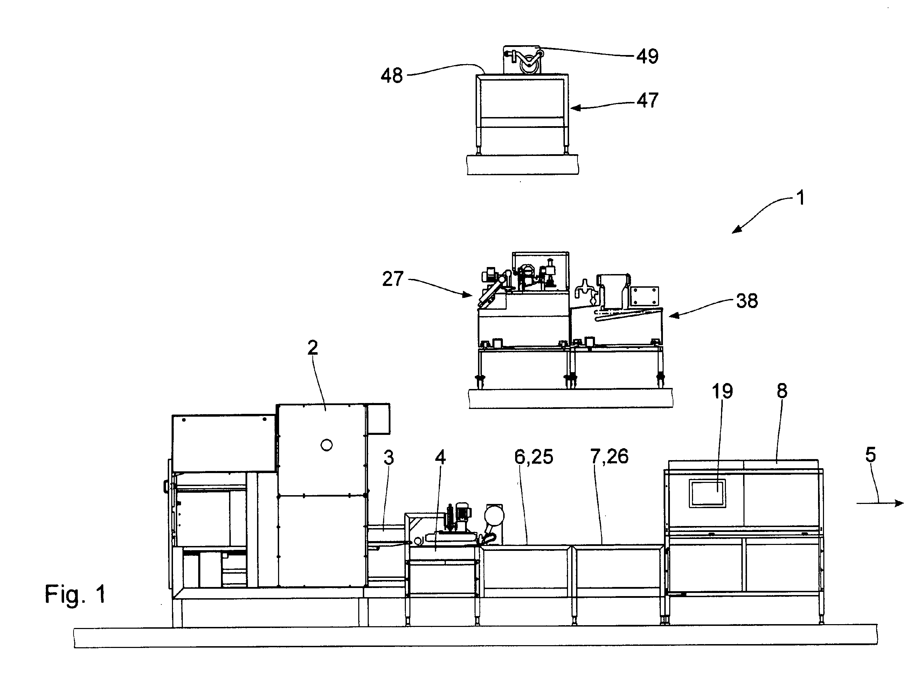

Eine in der Fig. 1 insgesamt dargestellte Teigbearbeitungsanlage 1 dient zur Produktion von nachfolgend zu backenden Teiglingen, z. B. von Brötchen, Brot, Baguette, Pizza, Tortilla, Donuts, Bagel, von Laminierprodukten oder von Ciabatta.

In einer führenden Kopfstation 2 der Teigbearbeitungsanlage 1 werden aus einer Teigmasse zunächst separate Teigportionen hergestellt. Diese werden in mehreren nebeneinander transportierten Teigportionsreihen über eine Spreizbandstation 3 einer Rollstation 4, z. B. einem Langroller, zur Herstellung von Roh-Teiglingen zugeführt. In der Rollstation 4 können die Teigportionen in an sich bekannter Weise zwischen einem Oberband und einem Unterband langgerollt werden. Dabei werden mehrere parallel quer zu einer Teigling-Förderrichtung 5 separat nebeneinander laufende Teigportionen langgerollt. Je nach voreingestellter Betriebsweise der Teigbearbeitungsanlage 1 ist die Rollstation 4 aktiv oder inaktiv.

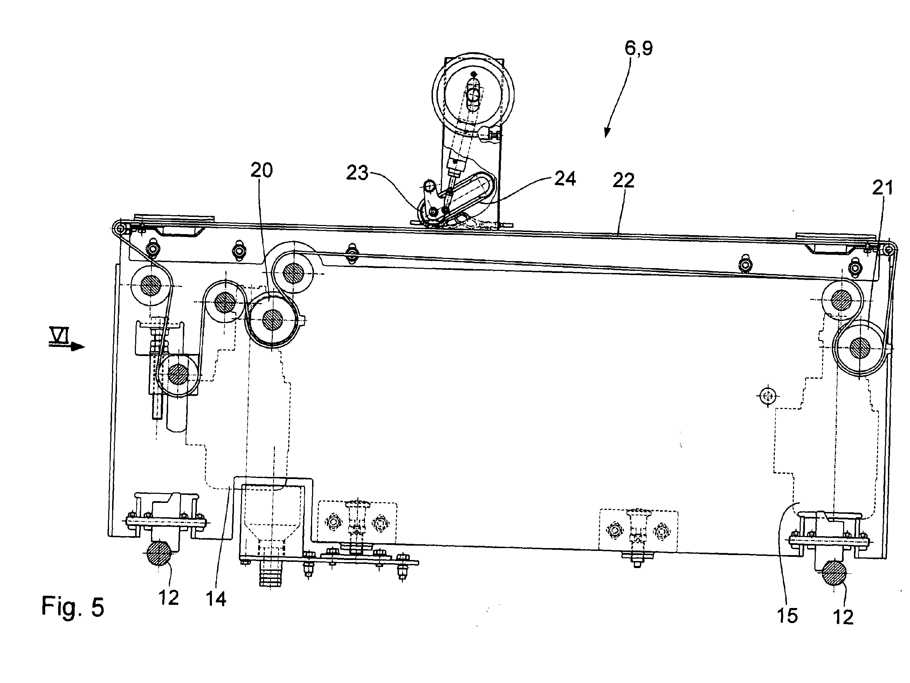

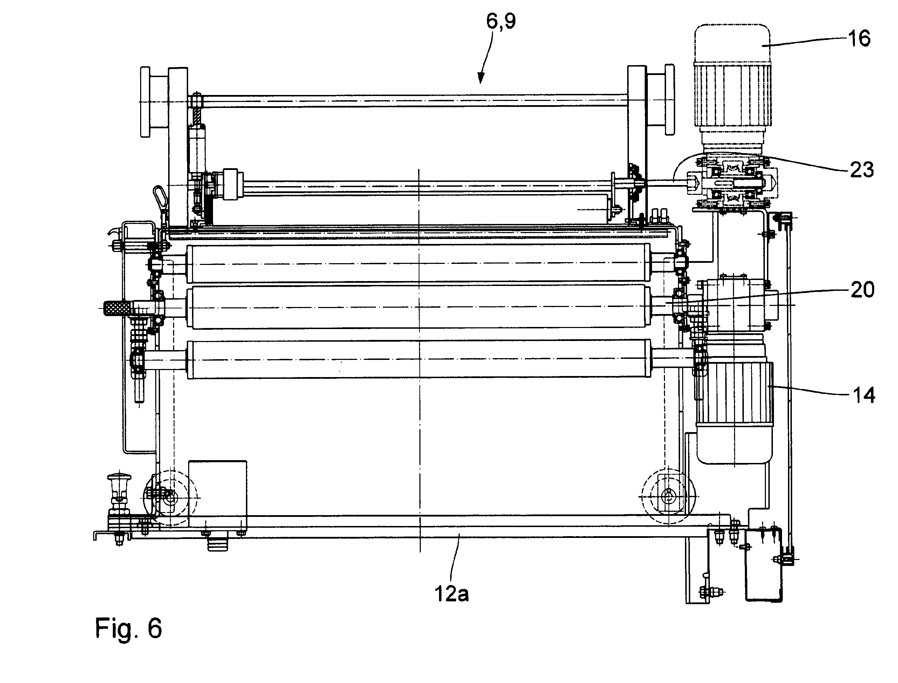

Der Rollstation 4 nachgeordnet ist ein Synchronisationsmodul 6, das auch als Timingrolle bezeichnet wird. Das Synchronisationsmodul 6 stellt in an sich bekannter Weise sicher, dass die in der Rollstation 4 langgerollten Roh-Teiglinge in den verschiedenen separaten Teigling-Reihen gleichzeitig und ohne Ortsversatz in der Förderrichtung 5 den weiteren Bearbeitungsstationen zugeführt werden. Bei inaktiver Rollstation kann auf das Synchronisationsmodul 6 auch verzichtet werden. Das Synchronisationsmodul 6 ist stärker im Detail in den Fig. 5 und 6 dargestellt.

Einem Teigling-Förderband des Synchronisationsmoduls 6 nachgeordnet ist ein entsprechendes Teigling-Förderband eines Überbrückungsmoduls 7, das auch als Zwischentisch bezeichnet wird.

Dem Teigling-Förderband des Überbrückungsmoduls 7 wiederum nachgeordnet ist ein Ablagemodul 8, welches die bearbeiteten Teiglinge in vorgegebener Weise der weiteren Bearbeitung, insbesondere einem Gär- und Backvorgang, zugänglich macht. Das Ablagemodul 8 kann die Teiglinge z. B. auf Blechen zwischenlagern oder auf ein weiteres Transportband überführen.

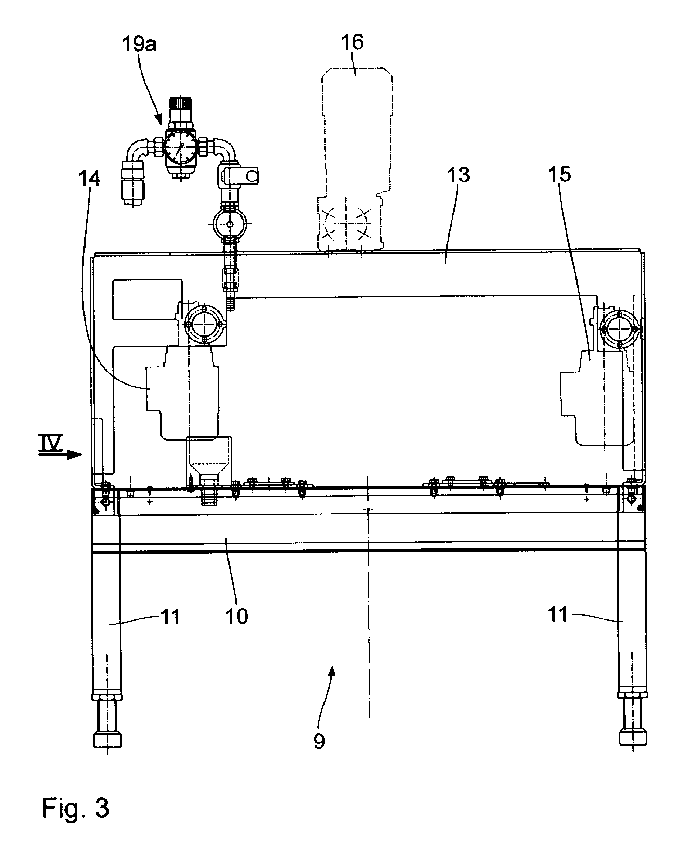

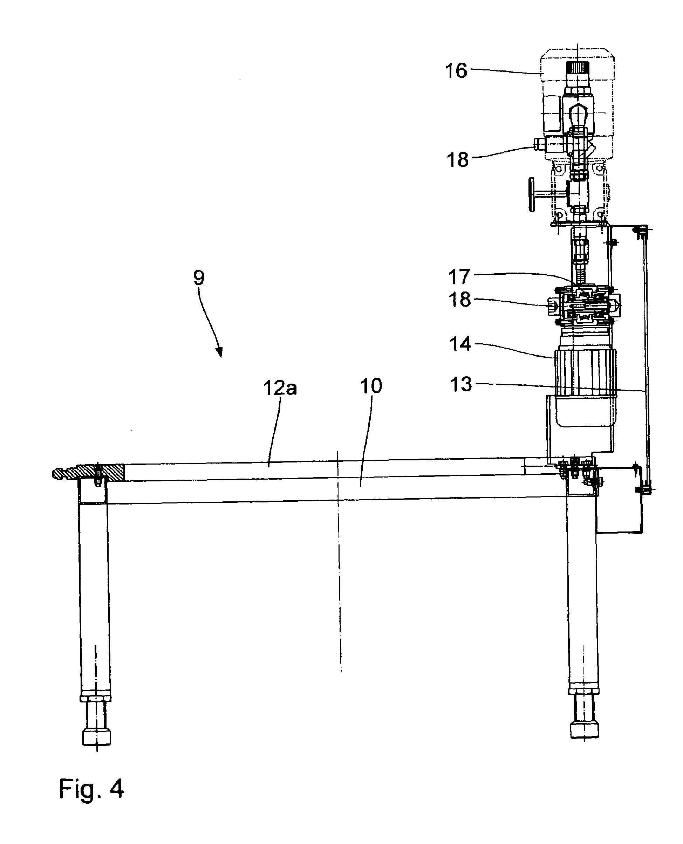

Das Synchronisationsmodul 6 und das Überbrückungsmodul 7 sind jeweils in einer Modulaufnahmeeinrichtung 9 angeordnet, die in den Fig. 3 und 4 dargestellt ist. Auch die Rollstation 4 und das Ablagemodul 8 können, obwohl dies in der Zeichnung nicht dargestellt ist, in einer entsprechenden Modulaufnahmeeinrichtung 9 angeordnet sein.

Die Modulaufnahmeeinrichtung 9 hat ein Traggestell 10, welches sich über Standfüße 11, die in der Höhe einstellbar sind, am Boden abstützt. Zu einer Seite, nämlich in der Fig. 4 nach links hin, ist das Traggestell 10 derart offen ausgeführt, dass Wechselmodule, z. B. das Synchronisationsmodul 6 und das Überbrückungsmodul 7, quer zur Förderrichtung 5 über Rollfüße 12 in die Modulaufnahmeeinrichtung 9 eingefahren und aus dieser herausgefahren werden können. Die Rollfüße 12 laufen auf quer zur Förderrichtung 5 verlaufenden Schienen 12a der Modulaufnahmeeinrichtung 9.

Die Modulaufnahmeeinrichtung 9 hat seitlich, in der Fig. 4 rechts, auf das Traggestell 10 aufgesetzt, einen Halterahmen 13. Dieser trägt bei der Ausführung der Modulaufnahmeeinrichtung 9 nach den Fig. 3 und 4 insgesamt drei Grund-Antriebsquellen 14, 15 und 16. Bei den Grund-Antriebsquellen 14 kann es sich um Antriebsmotoren mit Frequenzumformern, um Schrittmotoren, um kontinuierliche oder auch um intermittierende Antriebe handeln. Jede der Grund-Antriebsquellen 14 bis 16 hat eine über ein Umlenkgetriebe angetriebene Antriebswelle 17, die endseitig ein Kupplungselement 18 trägt. In der Fig. 4 sind zwei verschiedene Gestaltungen von Kupplungselementen 18 dargestellt. Die Kupplungselemente 18 dienen dazu, eine kraftschlüssige Verbindung der jeweiligen Antriebswelle 17 mit einer Anschlusswelle des in die Modulaufnahmeeinrichtung 9 eingesetzten Wechselmoduls herzustellen. Verschiedene Gestaltungen von Kupplungselementen 18, die eine derartige drehfeste Verbindung z. B. über Formschluss erzeugen, sind möglich. In der Fig. 4 unten ist ein als Innensechskant ausgebildetes Kupplungselement 18 dargestellt. Die Grund-Antriebsquellen 14 bis 16 werden von einer zentralen Steuereinrichtung 19 angesteuert, die im Ablagemodul 8 untergebracht ist. Die Modulaufnahmeeinrichtung 9 weist weiterhin einen Wasseranschluss 19a auf.

Fig. 5 zeigt das Synchronisationsmodul 6 sowie schematisch Antriebskomponenten der Modulaufnahmeeinrichtung 9, die das Synchronisationsmodul 6 aufnimmt. Mit den Kupplungselementen 18 der unteren Grund-Antriebsquellen 14, 15 wirken Übertragungswellen 20, 21 des Synchronisationsmoduls 6 zum Antrieb eines unteren Endlos-Förderbandes 22 zusammen, das, wie in den Fig. 5 und 6 gezeigt, über weitere Umlenk- und Spannrollen geführt ist. Die Übertragungswellen 20, 21 haben zu den Kupplungselementen 18 komplementäre Gegenkörper.

Mit dem Kupplungselement 18 der oberen Grund-Antriebsquelle 16 zusammen wirkt eine Übertragungswelle 23 eines Timing-Oberbandes 24 des Synchronisationsmoduls 6 zur Synchronisation der zugeführten Teigling-reihen zusammen. Auch die Übertragungswelle 23 hat einen zum Kupplungselement 18 der Grund-Antriebsquelle 16 komplementären Gegenkörper.

Das Überbrückungsmodul 7 kann entsprechend wie das Synchronisationsmodul 6 ausgeführt sein, allerdings ohne das Timing-Oberband 24. Wenn das Überbrückungsmodul 7 in die Modulaufnahmeeinrichtung 9 eingesetzt ist, bleibt die obere Grund-Antriebsquelle 16 inaktiv.

Die Teigbearbeitungsanlage 1 nach Fig. 1 weist insgesamt zwei Modulaufnahmeeinrichtungen 9 am Ort des Synchronisationsmoduls 6 und des Überbrückungsmoduls 7 auf. Diese beiden Modulaufnahmeeinrichtungen 9 geben zwei Wechselstationen 25, 26 der Teigbearbeitungsanlage 1 vor, wobei anstelle der Module 6, 7 in die Modulaufnahmeeinrichtungen 9 der Wechselstationen 25, 26 auch andere Wechselmodule eingesetzt werden können.

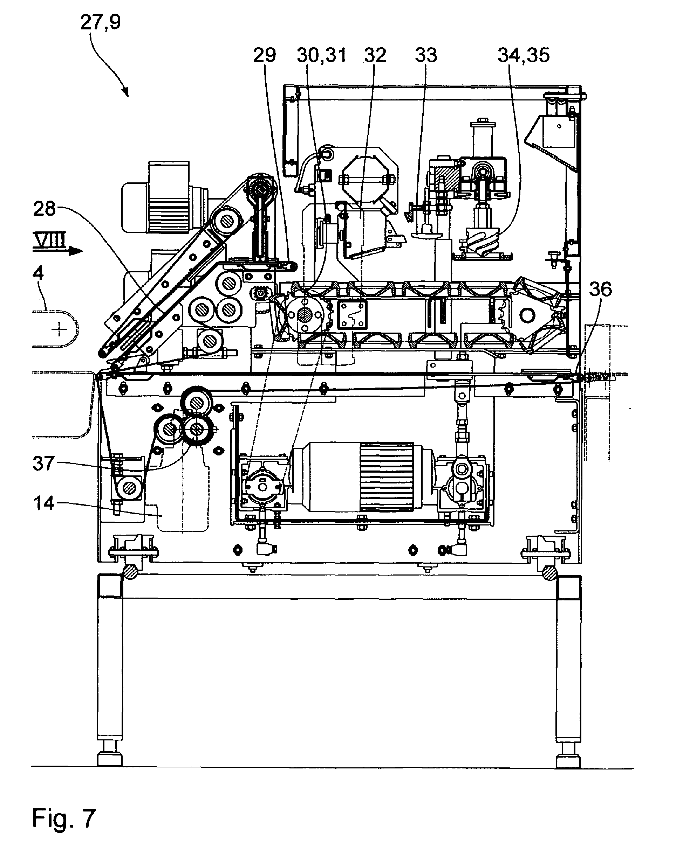

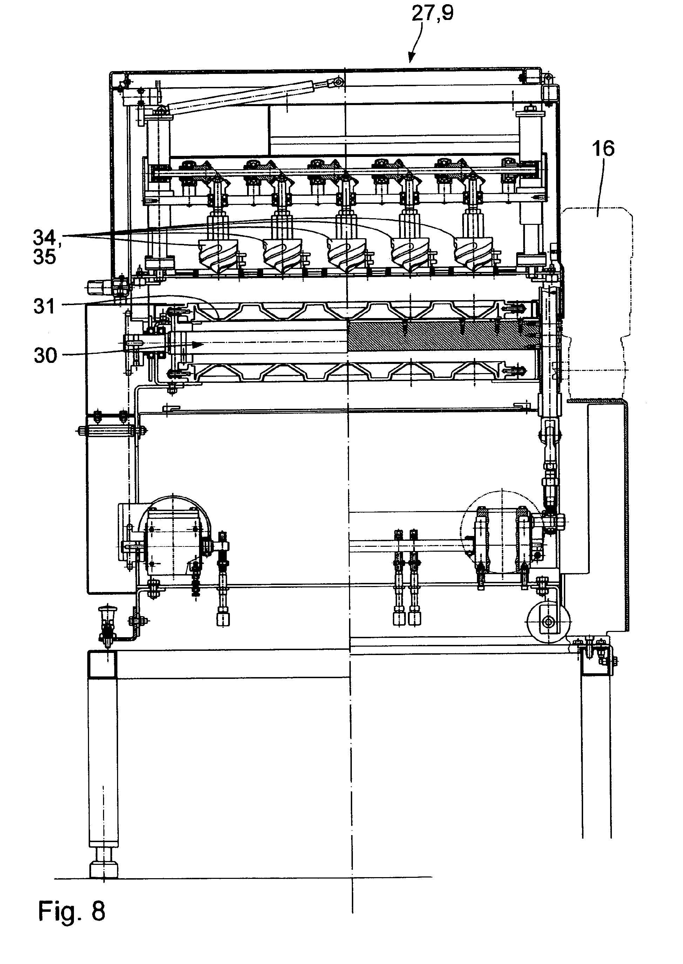

Ein Beispiel für ein derartiges Austausch-Wechselmodul für die in der Fig. 1 linke Wechselstation 25 zeigen die Fig. 7 und 8. Dort ist ein Stüpfel-/Stanzmodul 27 dargestellt. Roh-Teiglinge werden von der Rollstation 4 über ein Steigband 28 und ein Übergabeband 29 hin zu einem Becherwerk 30 mit einer Mehrzahl von Aufnahmebechern 31 übergeben. Die Roh-Teiglinge laufen in den Aufnahmebechern 31 unter einer Bestreueinheit 32, einer Vordrückeinheit 33 und einer Stüpfeleinheit 34 hindurch. Ein Stüpfelelement 35 der Stüpfeleinheit 34 wird gleichzeitig hub- und drehangetrieben, so dass im Roh-Teigling durch Zusammenwirken mit dem Stüpfelelement 35 eine entsprechende Prägung stattfindet. Anstelle der Stüpfeleinheit 34 kann auch eine alternative Stanzeinheit vorgesehen sein. Vom Becherwerk 30 werden die im Stüpfel-/Stanzmodul 27 bearbeiteten Teiglinge an eine nachfolgende Station weitergegeben. Dies erfolgt über ein unteres Endlos-Transportband 36 des Stüpfel-/Stanzmoduls 27.

Das untere Endlos-Transportband 36 wird angetrieben über eine Übertragungswelle 37, die wiederum über das Kupplungselement 18 von der Grund-Antriebsquelle 14 der Modulaufnahmeeinrichtung 9 angetrieben ist. Die Antriebe des Steigbands 28, des Übergabebands 29, des Becherwerks 30, der Bestreueinheit 32, der Vordrückeinheit 33 und der Stüpfeleinheit 34 erfolgen durch Antriebsquellen, die fest mit dem Stüpfel-/Stanzmodul 27 verbunden sind, also nicht zur Modulaufnahmeeinrichtung 9 gehören. Soweit das Stüpfel-/Stanzmodul 27 in die Modulaufnahmeeinrichtung 9 eingesetzt ist, sind die Grund-Antriebsquellen 15, 16 also inaktiv.

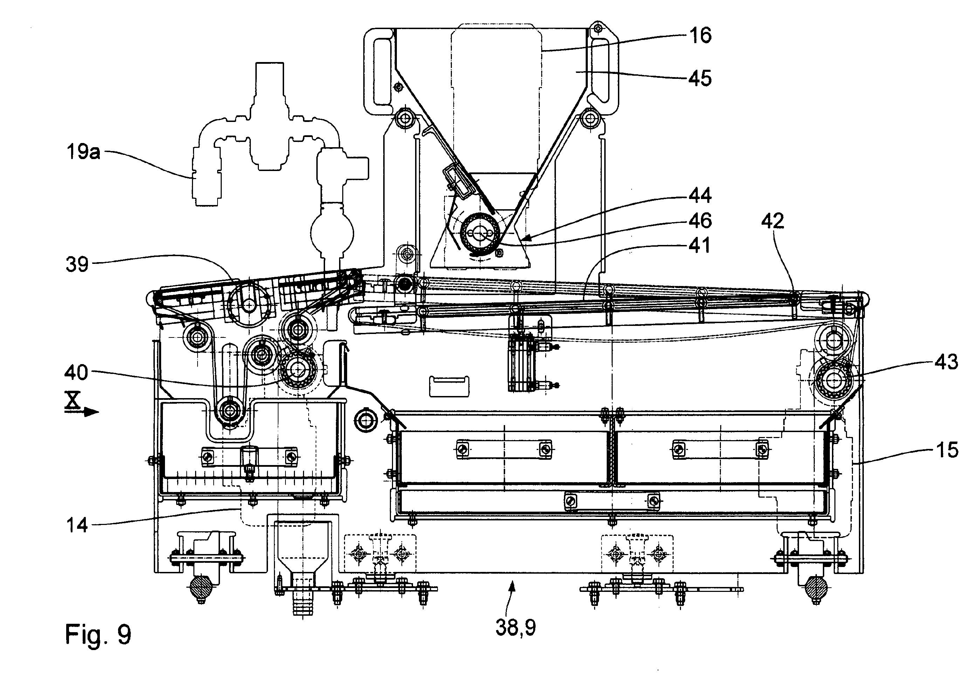

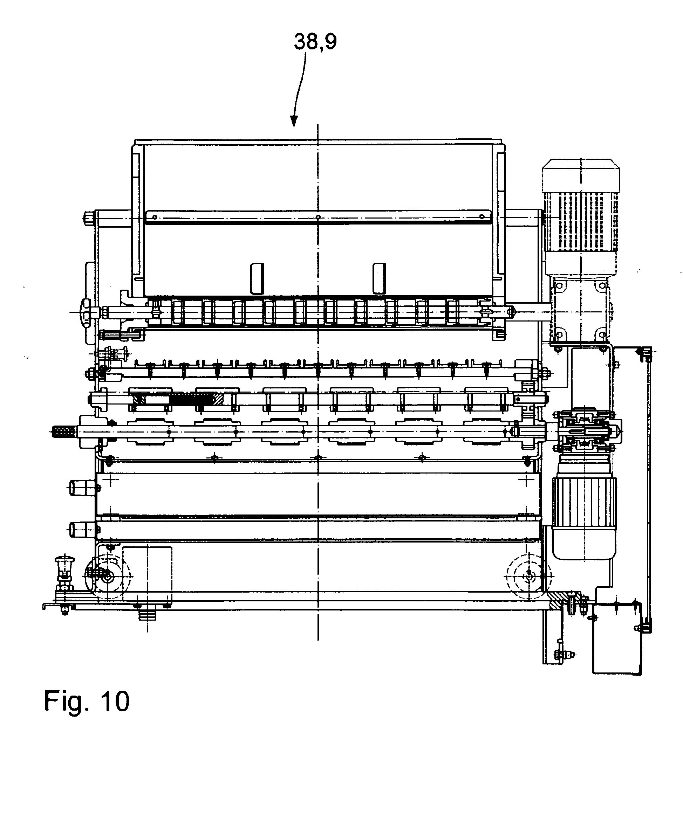

Ein weiteres Beispiel für ein Wechselmodul, welches anstelle des Überbrückungsmoduls 7 in die in der Fig. 1 rechte Wechselstation 26 eingesetzt sein kann, wird nachfolgend anhand der Fig. 9 und 10 beschrieben. Dort ist ein Befeuchtungs-/Streumodul 38 dargestellt. Roh-Teiglinge laufen in das Befeuchtungs-/Streumodul 38 über ein Einlauf-Förderband 39 ein. Letzteres wird angetrieben über eine Übertragungswelle 40, das Kupplungselement 18 sowie die Grund-Antriebsquelle 14. Während des Transports über das Einlauf-Förderband 39 werden die Roh-Teiglinge über den Wasseranschluss 19a der Modulaufnahmeeinrichtung 9 befeuchtet. Anschließend werden die Roh-Teiglinge an ein weiteres Endlos-Förderband 41 des Befeuchtungs-/Streumoduls 38 übergeben. Letzteres ist um eine auslaufseitige Umlenkrolle 42 schwenkbar, so dass ein Neigungswinkel des Endlos-Förderbandes 41 vorgebbar ist. Das Endlos-Förderband 41 wird angetrieben über eine Übertragungswelle 43, das Kupplungselement 18 und die Grund-Antriebsquelle 15.

Auf dem Endlos-Förderband 41 werden die Roh-Teiglinge unter einer Bestreueinheit 44 hindurchgeführt, durch die die Roh-Teiglinge mit Mehl oder Körnern bestreut werden können. Zur Bestreueinheit 44 gehört ein trichterförmiger Vorratsbehälter 45 für Mehl oder Korn. Zur definierten Bestreuung wird, angetrieben über eine Übertragungswelle 46, eine Durchgangsöffnung am Boden des Vorratsbehälters 45 intermittierend zur Bestreuung freigegeben. Die Übertragungswelle 46 wird über das Kupplungselement 18 von der Grund-Antriebsquelle 16 angetrieben. Am Auslauf des Endlos-Förderbands 41 werden die Teiglinge dann an die nächste Station der Teigbearbeitungsanlage 1 weitergegeben.

Anstelle des Synchronisationsmoduls 6 kann in die Wechselstation 25 auch ein schematisch in der Fig. 1 dargestelltes Schneidmodul 47 eingesetzt sein. Ein unteres Endlos-Förderband 48 von diesem kann, wie dies z. B. beim Synchronisationsmodul 6 dargestellt ist, von der Grund-Antriebsquelle 14 oder von den Grund-Antriebsquellen 14, 15 angetrieben sein. Eine Schneideinheit 49, mit der in die Roh-Teiglinge Längs-, Schräg- oder Quer-Einschnitte vorgenommen werden können, wird von einem fest mit dem Schneidmodul 47 verbundenen Motor, also nicht über die Modulaufnahmeeinrichtung 9, angetrieben.

Die Modulaufnahmeeinrichtung 9 hat einen nicht dargestellten, codierten Stecker zur Wechselmodulerkennung. Jedes der Wechselmodule hat eine mit dem Stecker zusammenwirkende Gegen-Steckeinheit, die individuell so codiert ist, dass nach dem Einfahren des jeweiligen Wechselmoduls und Verbinden der Antriebe und weiteren Anschlüssen automatisch eine Wechselmodulerkennung stattfindet, so dass die Grund-Antriebsquellen 14 bis 16 der Modulaufnahmeeinrichtung 9 entsprechend den Anforderungen des jeweiligen, erkannten Wechselmoduls angesteuert werden.

Die Teigbearbeitungsanlage 1 ist im dargestellten Ausführungsbeispiel linear aufgebaut. Auch ein winkeliger, kreisförmiger, hufeisenförmiger Aufbau und insbesondere auch ein mehretagiger Aufbau der Teigbearbeitungsanlage ist möglich.

## Patentansprüche

1. Teigbearbeitungsanlage (1)
- mit mindestens einer Wechselstation (25, 26) mit einem Teigling-Bearbeitungs-Wechselmodul (6, 7), welches gegen mindestens ein weiteres Teigling-Bearbeitungs-Wechselmodul (27, 47, 38) austauschbar ist,
- mit einer Ablagestation (8),
**dadurch gekennzeichnet, dass**
- die mindestens eine Wechselstation (25, 26) eine Modulaufnahmeeinrichtung (9) aufweist, in die das mindestens eine Teigling-Bearbeitungs-Wechselmodul (6, 27, 47, 7, 38) eingesetzt werden kann,
- wobei die Modulaufnahmeeinrichtung (9) mindestens eine stationäre Grund-Antriebsquelle (14 bis 16) aufweist, die über eine Kupplung (18)
-- mit einer angetriebenen Komponente (22) des Teigling-Bearbeitungs-Wechselmoduls (6, 7) zusammenwirkt,
-- mit einer angetriebenen Komponente (22; 36; 39, 41, 44; 48) des weiteren Teig-Bearbeitungs-Wechselmoduls (27, 47, 38) verbindbar ist.

2. Teigbearbeitungsanlage nach Anspruch 1, **gekennzeichnet durch** zwei Wechselstationen (25, 26) mit jeweils einem Teigling-Bearbeitungs-Wechselmodul (6, 7), welches gegen mindestens ein weiteres Teigling-Bearbeitungs-Wechselmodul (27, 47; 38) austauschbar ist,
- wobei jede Wechselstation (25, 26) eine Modulaufnahmeeinrichtung (9) aufweist, in die das mindestens eine Teigling-Bearbeitungs-Wechselmodul (6, 7, 27, 47, 38) eingesetzt werden kann,
- wobei jede Modulaufnahmeeinrichtung (9) mindestens eine stationäre Grund-Antriebsquelle (14 bis 16) aufweist, die über eine Kupplung (18)
-- mit einer angetriebenen Komponente (22) des Teigling-Bearbeitungs-Wechselmoduls (6, 7) zusammenwirkt,
-- mit einer angetriebenen Komponente (22; 36; 39, 41, 44; 48) des weiteren Teigling-Bearbeitungs-Wechselmoduls (6, 27, 47, 7, 38) verbindbar ist.

3. Teigbearbeitungsanlage nach Anspruch 1 oder 2, **dadurch gekennzeichnet, dass** die Modulaufnahmeeinrichtung (9) mindestens zwei stationäre Grund-Antriebsquellen (14 bis 16) aufweist, die jeweils über eine Kupplung (18),
-- mit einer angetriebenen Komponente (22) des Teigling-Bearbeitungs-Wechselmoduls (6, 7) verbindbar sind,
-- mit einer angetriebenen Komponente (22; 36; 39, 41, 44; 48) des weiteren Teigling-Bearbeitungs-Wechselmoduls (6, 27, 47, 7, 38) verbindbar ist.

4. Teigbearbeitungsanlage nach einem der Ansprüche 1 bis 3, **dadurch gekennzeichnet, dass** das Teigling-Bearbeitungs-Wechselmodul mindestens eine fest zugeordnete eigene Modul-Antriebsquelle aufweist.

5. Teigbearbeitungsanlage nach einem der Ansprüche 1 bis 4, **gekennzeichnet durch** mindestens ein Teigling-Bearbeitungs-Wechselmodul aus folgender Gruppe:
- Langrollmodul (4),
- Befeuchtungs-/Streumodul (38),
- Stüpfel-/Stanzmodul (27),
- Schneidmodul (47),
- Synchronisationsmodul (6),
- Überbrückungsmodul (7),
- Ablagemodul (8).

6. Teigbearbeitungsanlage nach einem der Ansprüche 1 bis 5, **dadurch gekennzeichnet, dass** die über die Grund-Antriebsquelle (14 bis 16) angetriebene Komponente eine Antriebswelle (20, 37, 40, 43, 46) für mindestens einen Antrieb des Teigling-Bearbeitungs-Wechselmoduls (6, 7, 27, 38, 47) aus folgender Gruppe ist:
- Bandantrieb,
- Antrieb für Streueinrichtung.

7. Teigbearbeitungsanlage nach einem der Ansprüche 1 bis 6 unter Rückbeziehung auf Anspruch 4, **dadurch gekennzeichnet, dass** die Modul-Antriebsquelle aus folgender Gruppe ist:
- Becherwerksantrieb,
- Stüpfler-Hubantrieb.

8. Teigbearbeitungsanlage nach einem der Ansprüche 1 bis 7, **dadurch gekennzeichnet, dass** die Modulaufnahmeeinrichtung (9) einen codierten Stecker zur Wechselmodulerkennung aufweist.
